# EUROPÄISCHE PATENTSCHRIFT

(11) **EP 2 652 394 B1**
(45) Veröffentlichungstag und Bekanntmachung des Hinweises auf die Patenterteilung: **12.06.2019**
(21) Anmeldenummer: 11772933.5
(22) Anmeldetag: 14.10.2011
(51) Int. Cl.: F21S 41/19, F21S 41/141, F21S 41/147, F21S 45/47, F21S 45/50, F21S 45/48, B60Q 1/00, F21S 45/49

(54) **SCHEINWERFER FÜR EIN FAHRZEUG MIT EINEM LED-HAUPTLICHTMODUL**
HEADLAMP FOR A VEHICLE HAVING AN LED MAIN LIGHT MODULE
PHARE POUR UN VÉHICULE COMPRENANT UN MODULE LUMINEUX PRINCIPAL À DEL

(30) Priorität: 15.10.2010 DE 102010048596
(43) Veröffentlichungstag der Anmeldung: 23.10.2013
(73) Patentinhaber: HELLA GmbH & Co. KGaA, 59552 Lippstadt (DE)
(72) Erfinder: MAZZIOTTI, Pietro-Antonio, 59556 Lippstadt (DE)
(86) Internationale Anmeldenummer: PCT/EP2011/068004
(87) Internationale Veröffentlichungsnummer: WO 2012/049299

(56) Entgegenhaltungen:
- WO-A2-2004/007241
- DE-A1-102004 017 454
- DE-A1-102008 061 526
- JP-A- 2005 071 818
- JP-A- 2007 220 619
- US-A1- 2006 104 077
- US-A1- 2008 062 709
- US-A1- 2008 247 182

## Beschreibung

**Die vorliegende Erfindung betrifft einen** Scheinwerfer für ein Fahrzeug mit einem Gehäuse, in dem wenigstens ein Hauptlichtmodul zur Aussendung eines Hauptlichtes des Fahrzeugs, insbesondere zur Aussendung eines Fernlichtes und/oder eines Abblendlichtes, aufgenommen ist, wobei das Hauptlichtmodul eine LED- Lichtquelle aufweist und wobei die LED- Lichtquelle auf einem Kühlkörper zur Kühlung der LED-Lichtquelle angeordnet ist, wobei das Hauptlichtmodul einen Reflektor aufweist, wobei der Kühlkörper mit der LED- Lichtquelle am Reflektor angeordnet ist, wobei das Hauptlichtmodul sowohl über den Kühlkörper als auch über den Reflektor haltend im Gehäuse aufgenommen werden kann, wobei sich der Kühlkörper durch einen Durchbruch im Gehäuse teilweise durch das Gehäuse des Scheinwerfers in einen Außenbereich des Gehäuses erstreckt und wobei zwischen dem Kühlkörper und dem Durchbruch im Gehäuse ein Dichtelement vorgesehen ist, und wobei das Dichtelement manschettenartig ausgeführt ist, wobei das manschettenartige Dichtelement einen kühlkörperseitigen Aufnahmeteil zur dichtenden Aufnahme auf dem Kühlkörper und einen gehäuseseitigen Aufnahmeteil zur dichtenden Aufnahme im Gehäuse aufweist.

Die DE 10 2004 058 200 A1 zeigt eine Beleuchtungseinrichtung für ein Fahrzeug, die eine Vielzahl von LED-Lichtquellen aufweist, die über ein gemeinsames Einheitshalterungsteil gehaltert sind. Das Einheitshalterungsteil dient zugleich zur Wärmeleitung und bildet einen Teil der Rückwand der Beleuchtungsvorrichtung, um mit der Luft eine Konvektionskühlung zu erreichen, die sich außerhalb der Beleuchtungseinrichtung befindet. Die LED-Lichtquellen in der Beleuchtungseinrichtung sind auf Kühlkörperabschnitten aufgebracht, die mit dem Einheitshalterungsteil verbunden sind. Damit wird mit dem Einheitshalterungsteil der Grundgedanke verfolgt, die Wärme, die durch den Betrieb der LED-Lichtquellen innerhalb der Beleuchtungseinrichtung entsteht, über einen kühlenden Abschnitt eines Körpers, an dem die Vielzahl der LED-Lichtquellen angeordnet sind, abzuführen. Jedoch ergibt sich eine komplexe Aufbauweise, da eine Vielzahl von Einzelkühlkörpern zunächst zu einem Einheitskühlkörper zusammengefasst werden müssen, so dass die gezeigte Anordnung für einen Scheinwerfer, der ein Hauptlichtmodul zur Erfüllung einer Hauptlichtfunktion wie ein Fernlicht oder ein Abblendlicht aufweist, nicht auf einfache Weise und mit geringem konstruktiven Aufwand ausgestaltet werden kann.

US 2006/0104077 A1 und JP 2007-220619 A offenbaren gattungsgemäße Scheinwerfer für Fahrzeuge.

Es ist daher die Aufgabe der vorliegenden Erfindung, einen Scheinwerfer für ein Fahrzeug zu schaffen, der eine vereinfachte Kühlung einer LED-Lichtquelle ermöglicht, die eine Hauptlichtfunktion des Scheinwerfers erfüllt.

Diese Aufgabe wird ausgehend von einem Scheinwerfer für ein Fahrzeug mit einem LED-Hauptlichtmodul gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

### OFFENBARUNG DER ERFINDUNG

Die Erfindung schließt die technische Lehre ein, dass sich der Kühlkörper teilweise durch das Gehäuse des Scheinwerfers in einen Außenbereich des Gehäuses erstreckt.

Der Vorteil der erfindungsgemäßen Ausführung wird dadurch erreicht, dass die LED-Lichtquelle unmittelbar auf dem Kühlkörper angeordnet ist, der sich teilweise durch das Gehäuse des Scheinwerfers in einen Außenbereich des Scheinwerfergehäuses erstreckt. Damit wird der Gedanke verfolgt, die LED-Lichtquelle direkt auf dem Kühlkörper aufzunehmen, so dass die LED-Lichtquelle mit dem Kühlkörper ein Lichtmodul bildet, welches einzeln beweglich im Gehäuse des Scheinwerfers angeordnet sein kann und eine Hauptlichtfunktion des Scheinwerfers erfüllt. Sind beispielsweise zwei Hauptlichtmodule im Scheinwerfer angeordnet, kann jedem Hauptlichtmodul ein eigener Kühlkörper zugeordnet sein, der sich jeweils durch Öffnungen im Gehäuse des Scheinwerfers hindurch erstreckt. Beispielsweise kann eine LED-Lichtquelle eine Abblendlichtfunktion erfüllen und eine weitere LED-Lichtquelle erfüllt eine Fernlichtfunktion. Beide LED-Lichtquellen sind unabhängig voneinander in Scheinwerfer angeordneten Lichtmodulen zugeordnet, die jeweils über einen eigenen Kühlkörper verfügen. Dieser kann sich erfindungsgemäß jeweils durch eine ebenso jeweils zugeordnete Öffnung im Scheinwerfergehäuse hindurch erstrecken.

Jedes der Hauptlichtmodule weist einen Reflektor auf, wobei der Kühlkörper mit der LED-Lichtquelle am Reflektor angeordnet ist, so dass die Einheit aus dem Kühlkörper, der LED-Lichtquelle und dem Reflektor eine Einheit bildet.

Weiterführend kann vorgesehen sein, dass das Hauptlichtmodul zur Lichtjustage beweglich im Gehäuse des Scheinwerfers aufgenommen ist, wobei insbesondere der Kühlkörper und die LED-Lichtquelle mit der Bewegung des Hauptlichtmoduls mitbewegbar sind. Sind mehrere LED-Lichtquellen im Scheinwerfer angeordnet, so kann jede LED-Lichtquelle ein eigenes Hauptlichtmodul mit einem zugeordneten Kühlkörper bilden. Jedes Hauptlichtmodul ist dabei zur Lichtjustage einzeln beweglich im Gehäuse des Scheinwerfers aufgenommen.

Gemäß der Erfindung erstreckt sich der Kühlkörper durch einen Durchbruch im Gehäuse teilweise in den Außenbereich des Gehäuses, wobei zwischen dem Kühlkörper und dem Durchbruch im Gehäuse ein Dichtelement vorgesehen ist. Der Durchbruch im Gehäuse ist dabei den Abmessungen des Kühlkörpers angepasst, wobei berücksichtigt wird, dass sich der Kühlkörper bei Bewegung des Hauptlichtmoduls zur Lichtjustage innerhalb des Scheinwerfergehäuses einen zusätzlichen Raum benötigt, so dass der Durchbruch an diesen Raum angepasst ist. Das Dichtelement erstreckt sich dabei zwischen dem Kühlkörper und dem Durchbruch, und das Dichtelement kann den Kühlkörper umschließen und sich tellerartig im Durchbruch befinden, um diesen abzudichten.

Ferner ist das Dichtelement manschettenartig ausgeführt, wobei das manschettenartige Dichtelement einen kühlkörperseitigen Aufnahmeteil zur dichtenden Aufnahme auf dem Kühlkörper und einen gehäuseseitigen Aufnahmeteil zur dichtenden Aufnahme im Gehäuse aufweist. Zwischen dem kühlkörperseitigen Aufnahmeteil und dem gehäuseseitigen Aufnahmeteil kann sich ein mäanderförmig ausgebildeter Faltenbalg erstrecken, und durch die Mäanderform kann die Bewegung des Kühlkörpers gegenüber dem Gehäuse ausgeglichen werden.

Weiterhin ist der gehäuseseitige Aufnahmeteil manuell vom Gehäuse lösbar, so dass das Dichtelement eine Servicekappe bildet, und so dass der Durchbruch im Gehäuse des Scheinwerfers eine Serviceöffnung des Gehäuses bildet. Dabei ist der Kühlkörper mit der LED-Lichtquelle manuell entnehmbar am Reflektor angeordnet. Wird der gehäuseseitige Aufnahmeteil des Dichtelementes aus dem Durchbruch im Gehäuse gelöst, so wird als weiterer Schritt der Kühlkörper manuell vom Reflektor entnommen. Alternativ kann die LED-Lichtquelle manuell vom Kühlkörper entnommen werden, so dass dieser im Gehäuse des Scheinwerfers verbleiben kann, um beispielsweise eine LED-Lichtquelle für die Hauptlichtfunktion zu wechseln.

Vorteilhafterweise weist der Kühlkörper eine Lamellenstruktur auf, welche an dem Teil des Kühlkörpers angeordnet sein kann, der sich aus dem Gehäuse des Scheinwerfers erstreckt. Damit wird eine Konvektionskühlung des Kühlkörpers mit der Luft außerhalb des Scheinwerfers begünstigt. Befindet sich beispielsweise die Lamellenstruktur des Kühlkörpers außerhalb des Scheinwerfers an einem Bereich des Scheinwerfers, der vom Fahrtwind des Fahrzeugs angeströmt wird, so kann die Lamellenstruktur an der Strömungsrichtung der Luft ausgerichtet werden.

Insbesondere kann der Kühlkörper einen Zylinderabschnitt aufweisen, und der Durchbruch des Kühlkörpers durch das Gehäuse des Scheinwerfers erfolgt im Bereich des Zylinderabschnittes, an dem sich vorzugsweise die Lamellenstruktur nach außen hin anschließt. Innenseitig kann am Zylinderabschnitt die LED-Lichtquelle angeordnet sein, um einen optimalen Wärmetransport von der LED-Lichtquelle in die außenseitige Lamellenstruktur zu bewirken.

Weiterführend kann der Kühlkörper einen Lamellenteil aufweisen, der innerhalb des Gehäuses des Scheinwerfers angeordnet ist. Damit wird eine optimale Kühlung des Innenraums des Scheinwerfers erreicht, wobei am Kühlkörper eine weitere Lichtquelle angeordnet sein kann, beispielsweise zur Erfüllung einer Nebenlichtfunktion eines Scheinwerfers, wie ein Positionslicht, ein Tagfahrlicht, ein Blinklicht oder dergleichen.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine perspektivische Ansicht eines Ausführungsbeispiels eines Scheinwerfers für ein Fahrzeug mit einem Kühlkörper, auf dem eine Lichtquelle angeordnet ist,
- Fig. 2: eine Rückansicht des Scheinwerfers mit einem Gehäuse, in dem ein Durchbruch eingebracht ist, wobei sich durch den Durchbruch der Kühlkörper erstreckt und wobei der Durchbruch mit einem Dichtelement abgedichtet ist und
- Fig. 3: eine perspektivische Ansicht des Kühlkörpers mit der LED-Lichtquelle und dem Dichtelement, wobei ein Reflektor am Kühlkörper angeordnet ist.

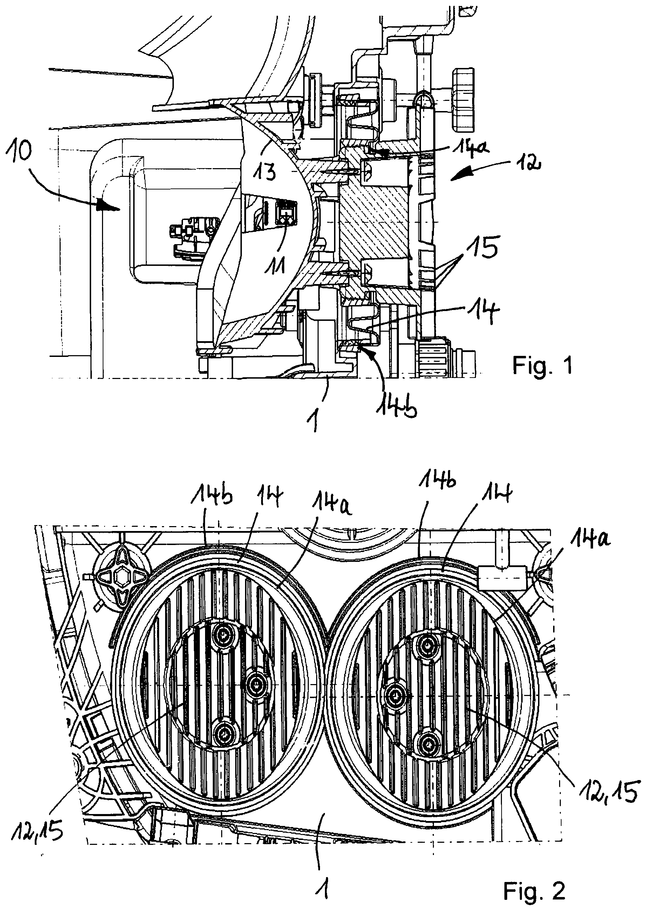

Figur 1 zeigt einen Scheinwerfer für ein Fahrzeug gemäß einem bevorzugten Ausführungsbeispiel der Erfindung. Dargestellt ist ein Hauptlichtmodul 10 des Scheinwerfers, welches zur Aussendung eines Fernlichtes und/oder eines Abblendlichtes vorgesehen ist. Als zentrales Element besitzt das Hauptlichtmodul 10 eine LED-Lichtquelle 11, die Licht in einen Reflektor 13 des Scheinwerfers emittieren kann.

Zur Kühlung der LED-Lichtquelle ist ein Kühlkörper 12 vorgesehen, der aus Aluminium beispielsweise mittels eines Metall-Druckgussverfahrens hergestellt sein kann. Der Kühlkörper 12 ist derart ausgebildet, dass die LED-Lichtquelle 11 am Kühlkörper 12 angeordnet werden kann. Ferner ist der Reflektor 13 am Kühlkörper 12 angeordnet, wobei die Einheit aus dem Kühlkörper 12, der LED-Lichtquelle 11 und dem Reflektor 13 haltend im Gehäuse 1 des Scheinwerfers eingebracht sein kann. Dabei kann das Hauptlichtmodul 10, wenigstens gebildet aus der gezeigten LED-Lichtquelle 11, dem Kühlkörper 12 sowie dem Reflektor 13, sowohl über den Kühlkörper 12 als auch über den Reflektor 13 haltend im Gehäuse 1 des Scheinwerfers aufgenommen sein. Die Aufnahme des Hauptlichtmoduls 10 ist derart ausgestaltet, dass das Hauptlichtmodul 10 im Gehäuse 1 des Scheinwerfers verschwenkt werden kann. Mit der Beweglichkeit des Hauptlichtmoduls 10 kann erreicht werden, dass das durch das Hauptlichtmodul 10 emittierte Licht justiert werden kann, beispielsweise kann durch die Beweglichkeit die Hell-Dunkel-Grenze eines Abblendlichtes einjustiert werden, das durch das Hauptlichtmodul 10 wenigstens teilweise bereitgestellt wird.

Die Darstellung zeigt die erfindungsgemäße Ausgestaltung des Kühlkörpers 12, der sich durch einen Durchbruch im Gehäuse 1 des Scheinwerfers hindurch erstreckt. Der Bereich des Kühlkörpers 12, der sich außerhalb des Gehäuses 1 des Scheinwerfers befindet, ist als Lamellenstruktur 15 ausgestaltet. Damit wird eine Konvektionskühlung des Kühlkörpers 12 durch die den Scheinwerfer umgebende Luft begünstigt.

Das Ausführungsbeispiel zeigt zwischen dem Durchbruch im Gehäuse 1 und dem Kühlkörper 12 ein Dichtelement 14, um den Innenraum des Gehäuses 1 des Scheinwerfers gegen äußere Einflüsse abzudichten. Das Dichtelement 14 ist manschettenartig ausgeführt und weist einen kühlkörperseitigen Aufnahmeteil 14a zur dichtenden Aufnahme auf dem Kühlkörper 12 und einen gehäuseseitigen Aufnahmeteil 14b zur dichtenden Aufnahme im Gehäuse 1 auf. Zwischen den Aufnahmeteilen 14a und 14b erstreckt sich ein faltenbalgartiger Bereich des Dichtelementes 14, um die Beweglichkeit der Aufnahmeteile 14a und 14b zueinander zu schaffen.

Figur 2 zeigt eine rückseitige Ansicht des Gehäuses 1 des Scheinwerfers in dem Bereich, in dem sich zwei Kühlkörper 12 von zwei Hauptlichtmodulen durch das Gehäuse 1 hindurch erstrecken. Die Kühlkörper 12 besitzen außenseitig jeweils eine Lamellenstruktur 15, wobei die Ausrichtung der Lamellen der Lamellenstruktur 15 an einer Luftströmung angepasst sein kann, die die Lamellenstruktur 15 des Kühlkörpers 12 anströmt. Insbesondere kann die Luftströmung durch den Fahrtwind des Fahrzeugs entstehen, und beispielsweise kann sich der Kühlkörper 12 mit der Lamellenstruktur 15 auf der Unterseite des Scheinwerfers hinweg erstrecken.

Die Darstellung zeigt ferner, dass das Dichtelement 14 im Bereich des gehäuseseitigen Aufnahmeteils 14b aus dem Gehäuse 1 manuell lösen lässt, und der Kühlkörper 12 kann aus dem Gehäuse 1 des Scheinwerfers entnommen werden. Die Entnahme kann notwendig sein, wenn das LED-Leuchtmittel 11 ausgetauscht werden muss.

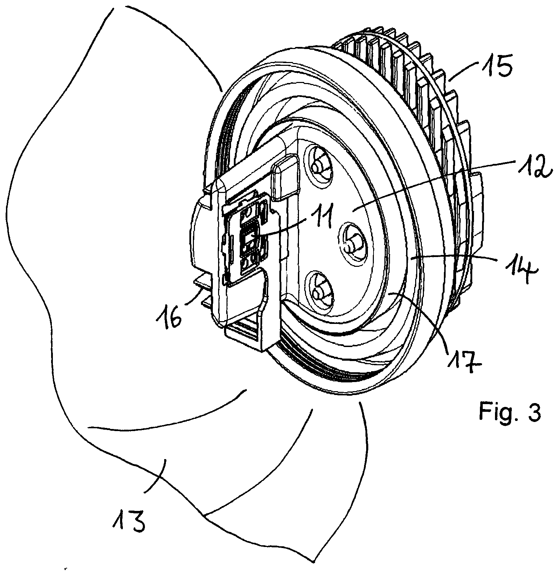

Figur 3 zeigt eine weitere perspektivische Ansicht eines Ausführungsbeispiels des Kühlkörpers 12, der angrenzend an einen Reflektor 13 angeordnet ist. Der Kühlkörper 12 besitzt Mittel zur Aufnahme der LED-Lichtquelle 11, wobei die Aufnahme angrenzend an die Innenseite der Lamellenstruktur 15 erfolgt, um eine optimale Kühlung der LED-Lichtquelle 11 zu erreichen. Insbesondere ist der Kühlkörper 12 mit einem Zylinderabschnitt 17 gezeigt, um den sich das Dichtelement 14 erstreckt. Die LED-Lichtquelle 11 kann etwa zentrisch im Bereich des Zylinderabschnittes 17 des Kühlkörpers 12 angeordnet werden, und rückseitig des Zylinderabschnittes 17 erstreckt sich die Lamellenstruktur 15 zur Außenseite des Gehäuses 1 des Scheinwerfers. Durch die runde Außenkontur des Zylinderabschnittes 17 wird eine vorteilhafte Ausgestaltung des manschettenartigen Dichtelementes 14 erreicht, so dass eine Beweglichkeit des Kühlkörpers 12 in jeder Radialrichtung des Zylinderabschnittes 17 sichergestellt ist.

Der Kühlkörper 12 ist ferner mit einem Lamellenteil 16 gezeigt, der sich innerhalb des Scheinwerfergehäuses befindet. Der Lamellenteil 16 kann einteilig mit dem Zylinderabschnitt 17 und der Lamellenstruktur 15 ausgeführt sein, so dass der Kühlkörper 12 insgesamt ein einzelnes Bauteil bildet.

Die Erfindung beschränkt sich in ihrer Ausführung nicht auf das vorstehend angegebene bevorzugte Ausführungsbeispiel. Der Schutzumfang wird ausschließlich durch die beigelegte Ansprüche begrenzt.

### Bezugszeichenliste

- 1: Gehäuse
- 10: Hauptlichtmodul
- 11: LED- Lichtquelle
- 12: Kühlkörper
- 13: Reflektor
- 14: Dichtelement
- 14a: kühlkörperseitiger Aufnahmeteil
- 14b: gehäuseseitiger Aufnahmeteil
- 15: Lamellenstruktur
- 16: Lamellenteil
- 17: Zylinderabschnitt

## Patentansprüche

1. Scheinwerfer für ein Fahrzeug mit einem Gehäuse (1), in dem wenigstens ein Hauptlichtmodul (10) zur Aussendung eines Hauptlichtes des Fahrzeugs, insbesondere zur Aussendung eines Fernlichtes und/oder eines Abblendlichtes, aufgenommen ist, wobei das Hauptlichtmodul (10) eine LED- Lichtquelle (11) aufweist und wobei die LED- Lichtquelle (11) auf einem Kühlkörper (12) zur Kühlung der LED- Lichtquelle (11) angeordnet ist, wobei das Hauptlichtmodul (10) einen Reflektor (13) aufweist, wobei der Kühlkörper (12) mit der LED- Lichtquelle (11) am Reflektor (13) angeordnet ist, wobei das Hauptlichtmodul (10) sowohl über den Kühlkörper (12) als auch über den Reflektor (13) haltend im Gehäuse (1) aufgenommen werden kann, wobei sich der Kühlkörper (12) durch einen Durchbruch im Gehäuse (1) teilweise durch das Gehäuse (1) des Scheinwerfers in einen Außenbereich des Gehäuses (1) erstreckt und wobei zwischen dem Kühlkörper (12) und dem Durchbruch im Gehäuse (1) ein Dichtelement (14) vorgesehen ist, und wobei das Dichtelement (14) manschettenartig ausgeführt ist, wobei das manschettenartige Dichtelement (14) einen kühlkörperseitigen Aufnahmeteil (14a) zur dichtenden Aufnahme auf dem Kühlkörper (12) und einen gehäuseseitigen Aufnahmeteil (14b) zur dichtenden Aufnahme im Gehäuse (1) aufweist,
**dadurch gekennzeichnet, dass** der gehäuseseitige Aufnahmeteil (14b) manuell vom Gehäuse (1) lösbar ist, sodass das Dichtelement (14) eine Servicekappe bildet, und sodass der Durchbruch im Gehäuse (1) des Scheinwerfers eine Serviceöffnung des Gehäuses (1) bildet, wobei der Kühlkörper (12) mit der LED-Lichtquelle (11) manuell entnehmbar am Reflektor (13) angeordnet ist, sodass der Kühlkörper (12) aus dem Gehäuse (1) entnommen werden kann.

2. Scheinwerfer nach Anspruch 1, **dadurch gekennzeichnet, dass** das Hauptlichtmodul (10) zur Lichtjustage beweglich im Gehäuse (1) des Scheinwerfers aufgenommen ist, wobei insbesondere der Kühlkörper (12) und die LED- Lichtquelle (11) mit der Bewegung des Hauptlichtmoduls (10) mitbewegbar sind.

3. Scheinwerfer nach Anspruch 1 oder 2, **dadurch gekennzeichnet, dass** der Kühlkörper (12) eine Lamellenstruktur (15) aufweist, welche vorzugsweise an dem Teil des Kühlkörpers (12) angeordnet ist, der sich aus dem Gehäuse (1) des Scheinwerfers erstreckt.

4. Scheinwerfer nach einem der Ansprüche 1 bis 3, **dadurch gekennzeichnet, dass** der Kühlkörper (12) einen Zylinderabschnitt (17) aufweist, und der Durchbruch des Kühlkörpers (12) durch das Gehäuse (1) des Scheinwerfers erfolgt im Bereich des Zylinderabschnittes, an den sich vorzugsweise die Lamellenstruktur (15) nach außen hin anschließt.

5. Scheinwerfer nach einem der vorgenannten Ansprüche, **dadurch gekennzeichnet, dass** der Kühlkörper (12) einen Lamellenteil (16) aufweist, der innerhalb des Gehäuses (1) des Scheinwerfers angeordnet ist.

## Claims

1. Headlight for a vehicle with a housing (1) that holds at least one main light module (10) for sending out a main light of the vehicle, in particular for sending out a high beam and/or a low beam, where the main light module (10) has an LED light source (11) and, where the LED light source (11) and where the LED light source (11) is arranged on a heat sink (12) for cooling the LED light source (11), where the main light module (10) has a reflector (13), where the heat sink (12) is arranged with the LED light source (11) on the reflector (13), where the main light module (10) can be taken up both through the heat sink (12) and through the reflector (13) stopping in the housing (1), where the heat sink (12) extends partially through the housing (1) of the headlight through an aperture in the housing (1) into an area outside the housing (1) and where a sealing element (14) is provided for between the heat sink (12) and the aperture in the housing (1) and where the sealing element (14) is manufactured to be sleeve-like, where the sleeve-like sealing element (14) has a holder part (14a) on the heat sink side such that it can be held on the heat sink to act as a seal and a holder part (14b) on the housing side so that it can be held on the housing to act as a seal, **characterized in that** the holder part on the housing side (14b) can be manually detached from the housing (1) such that the sealing element (14) forms a service cap and such that the aperture in the housing (1) of the headlight forms a service opening in the housing (1), where the heat sink (12) with the LED light source (11) is arranged at the reflector (13) such that it can be manually removed so that the heat sink (12) can be removed from the housing (1).

2. Headlight according to Claim 1 **characterized in that** the main light module (10) is held in a movable way in the housing (1) of the headlight for the purpose of adjusting the light, where in particular the heat sink (12) and the LED light source (11) move along with the movement of the main light module (10).

3. Headlight according to Claim 1 or 2, **characterized in that** the heat sink (12) has a lamella structure (15) that is preferentially arranged on that part of the heat sink (12) that extends out of the housing (1) of the headlight.

4. Headlight according to one of Claims 1 through 3, **characterized in that** the heat sink (12) has a cylindrical section (17) and the heat sink (12) aperture through the housing (1) of the headlight is effected in the area of the cylindrical section to which the lamella structure (15) is preferentially connected towards the outside.

5. Headlight according to one of the aforementioned claims, **characterized in that** the heat sink (12) has a lamellar part (16) that is arranged within the housing (1) of the headlight.

## Revendications

1. Phare pour un véhicule avec un boîtier (1) dans lequel est intégré au moins un module lumineux principal (10) pour l'émission du rayon lumineux principal du véhicule, en particulier pour l'émission de la lumière du feu de route et/ou du feu de croisement, sachant que le module lumineux principal (10) présente une source lumineuse LED (11) et sachant que cette source lumineuse LED (11) est placée sur un dissipateur thermique (12) destiné à refroidir la source lumineuse LED (11), sachant que le module lumineux principal (10) présente un réflecteur (13), sachant que le dissipateur thermique (12) est placé avec la source lumineuse LED (11) sur le réflecteur (13), sachant que le module lumineux principal (10) peut être fixé dans le boîtier (1) aussi bien par le dissipateur thermique (12) que par le réflecteur (13), sachant que le dissipateur thermique (12) s'étend en partie à travers une découpe dans le boîtier (1) du phare dans une zone située à l'extérieur du boîtier (1) et sachant qu'un élément d'étanchéité (14) est prévu entre le dissipateur thermique (12) et la découpe du boîtier (1), et sachant que l'élément d'étanchéité (14) est formé comme un manchon, sachant que l'élément d'étanchéité (14) en forme de manchon présente une pièce de réception (14a) côté dissipateur thermique pour un attachement étanche au dissipateur thermique (12) et une pièce de réception (14b) côté boîtier pour un attachement étanche au boîtier (1), **caractérisé en ce que,** la pièce de réception (14b) côté boîtier peut être détachée manuellement du boîtier (1), de sorte que l'élément d'étanchéité (14) forme un capuchon de maintenance, et de sorte que la découpe dans le boîtier (1) du phare forme une ouverture de maintenance du boîtier (1), sachant que le dissipateur thermique (12) est placé avec la source lumineuse LED (11) sur le réflecteur (13) de manière à pouvoir être retiré manuellement, de sorte que le dissipateur thermique (12) puisse être retiré du boîtier (1).

2. Phare selon la revendication 1, **caractérisé en ce que** le module lumineux principal (10) est inséré de manière mobile dans le boîtier (1) du phare à des fins de réglage de la luminosité, sachant que notamment le dissipateur thermique (12) et la source lumineuse LED (11) peuvent être déplacés en même temps que le module lumineux principal (10).

3. Phare selon la revendication 1 ou 2, **caractérisé en ce que** le dissipateur thermique (12) présente une structure à ailettes (15) de préférence disposée sur la partie du dissipateur thermique (12) dépassant du boîtier (1) du phare.

4. Phare selon l'une des revendications 1 à 3, **caractérisé en ce que** le dissipateur thermique (12) présente une section cylindrique (17) et que le passage du dissipateur thermique à travers le boîtier (1) du phare s'opère au niveau de la section cylindrique à laquelle se rattache de préférence la structure à ailettes (15) vers l'extérieur.

5. Phare selon l'une des revendications susmentionnées, **caractérisé en ce que** le dissipateur thermique (12) présente un élément d'ailette (16) placé à l'intérieur du boîtier (1) du phare.
